# EUROPEAN PATENT APPLICATION

(11) **EP 4 815 153 A1**
(43) Date of publication of application: **30.09.2026**
(21) Application number: 24893322.8
(22) Date of filing: 14.11.2024
(51) Int. Cl.: H01M 50/30

(54) **SEALING MEMBER, BATTERY MODULE AND ELECTRICAL DEVICE**

(30) Priority: 24.11.2023 CN 202311585195
(71) Applicant: Ningde Amperex Technology Limited, Ningde, Fujian 352100 (CN)
(72) Inventor: ZHANG, Guowen, Ningde, Fujian 352100 (CN)
(74) Representative: Kraus & Lederer PartGmbB
(86) International application number: PCT/CN2024/131998
(87) International publication number: WO 2025/108164

(57) **Abstract**

A seal, a battery module (100), and an electric device (200) are provided. The battery module (100) includes a housing (10), a battery cell (20), a first seal (30), and a second seal (40). The housing (10) is provided with a first through-hole (10a), a second through-hole (10b), and an accommodating space (10c). The first through-hole (10a) communicates with the accommodating space (10c), and the second through-hole (10b) communicates with the accommodating space (10c). The battery cell (20) is disposed in the accommodating space (10c). The first seal (30) is connected to the housing (10) and seals the first through-hole (10a). The second seal (40) is connected to the housing (10) and seals the second through-hole (10b). The first seal (30) is configured to melt and/or lose adhesion to form a first pressure relief channel when an internal temperature of the battery module (100) reaches a first temperature. The second seal (40) is configured to melt and/or lose adhesion to form a second pressure relief channel when the internal temperature of the battery module (100) reaches a second temperature, the second temperature being greater than the first temperature. The second temperature of the second seal (40) being greater than the first temperature of the first seal (30) facilitates pressure relief, reduces the risk of short-circuiting between the battery cell (20) and the housing (10), and improves the safety and reliability of pressure relief of the battery module (100).

## Description

### TECHNICAL FIELD

The present application relates to the field of energy storage technology, and in particular, to a seal, a battery module, and an electric device.

### BACKGROUND

Batteries are currently widely used in fields such as unmanned aerial vehicles, electric vehicles, and electric tools. Typically, hard-shell batteries are provided with pressure relief holes, but existing hard-shell batteries have issues of pressure relief occurring too early or too late, resulting in low safety and reliability.

### SUMMARY

In view of this, it is necessary to provide a seal, a battery module, and an electric device that can achieve reliable pressure relief and improve the safety of the battery module.

An embodiment of the present application provides a battery module including a housing, a battery cell, a first seal, and a second seal. The housing is provided with a first through-hole, a second through-hole, and an accommodating space. The first through-hole communicates with the accommodating space. The second through-hole communicates with the accommodating space. The battery cell is disposed in the accommodating space. The first seal is connected to the housing and seals the first through-hole. The second seal is connected to the housing and seals the second through-hole. The first seal is configured to melt and/or lose adhesion to form a first pressure relief channel when the internal temperature of the battery module reaches a first temperature. The second seal is configured to melt and/or lose adhesion to form a second pressure relief channel when the internal temperature of the battery module reaches a second temperature. The second temperature is greater than the first temperature. The higher the temperature of the battery module, the higher the gas generation rate. The present application, by providing the first through-hole and the second through-hole, where the second temperature of the second seal is greater than the first temperature of the first seal, can match different gas generation rates of the battery module at different temperatures, facilitating pressure relief. By providing the first seal at the first through-hole and the second seal at the second through-hole, a sufficient pressure relief area can be ensured. At the first temperature, it is beneficial to reduce the pressure relief area of the battery module, thereby reducing the risk of external water vapor and oxygen entering the battery cell during pressure relief at the first temperature, the entry of which could accelerate side reactions of the battery cell and lead to intensified combustion. At the second temperature, the second pressure relief channel can increase the pressure relief area and pressure relief rate, reducing the risk of short-circuiting between the battery cell and the housing, thereby improving the safety and reliability of pressure relief of the battery module.

Optionally, in some embodiments of the present application, the housing includes a bottom wall and a side wall. The side wall is connected to the bottom wall. The first seal and the side wall are arranged along a first direction. The first through-hole penetrates the side wall. The second through-hole penetrates the side wall. The first direction is the length direction or width direction of the battery module, which can reduce the risk of the battery cell blocking the first through-hole and the second through-hole, facilitating pressure relief.

Optionally, in some embodiments of the present application, the side wall includes a first side wall. The battery module includes an electrical connector. The electrical connector is connected to the battery cell and extends from the first side wall. A first space is provided between the first side wall and the battery cell. The first through-hole penetrates the first side wall. The second through-hole penetrates the first side wall. By arranging the first through-hole and the second through-hole on the same side wall as the electrical connector and by utilizing the first space, it facilitates pressure relief.

Optionally, in some embodiments of the present application, the side wall includes a first side wall and a second side wall. The battery module includes an electrical connector. The electrical connector is connected to the battery cell and extends from the first side wall. The first side wall and the second side wall are arranged along the first direction. The first through-hole penetrates the second side wall, and the second through-hole penetrates the second side wall, which is beneficial for protecting the protective plate during pressure relief or when external water vapor enters the housing, reducing the risk of short-circuiting of the protective plate.

Optionally, in some embodiments of the present application, the first seal includes a first sealing portion. The first sealing portion is adhesively bonded to the housing, which can reduce material costs and process steps.

Optionally, in some embodiments of the present application, the first seal includes a first sealing portion and a first connecting portion. The first connecting portion is adhesively bonded to the first sealing portion. The first sealing portion is adhesively bonded to the housing. By providing the first connecting portion, it is possible to reduce the infiltration of water or water vapor into the accommodating space through the first sealing portion, thereby reducing the risk of short-circuiting.

Optionally, in some embodiments of the present application, the first seal includes a first connecting portion, a first sealing portion, and a first fixing portion. Two sides of the first sealing portion are connected to the first connecting portion and the first fixing portion. The first fixing portion is connected to the housing. The first fixing portion is provided with a first opening, and the first opening communicates with the first through-hole. The first fixing portion can enhance the connection strength between the first seal and the housing, reducing the risk of gas leakage.

Optionally, in some embodiments of the present application, an area S1 of the first opening satisfies 0.008 mm² ≤ S1 ≤ 16 mm², which can minimize the pressure relief area S1 on the basis that the pressure relief rate corresponding to the pressure relief area S1 is not less than the gas generation rate, making it less likely for external water vapor and oxygen to enter the battery module, thereby reducing the risk of accelerated side reactions and combustion of the battery cell.

Optionally, in some embodiments of the present application, the first sealing portion includes a first adhesive layer, a first support layer, and a second adhesive layer. The first adhesive layer adhesively bonds the first connecting portion and the first support layer. The second adhesive layer adhesively bonds the first fixing portion and the first support layer.

Optionally, in some embodiments of the present application, the first connecting portion and the first fixing portion include at least one metal material selected from aluminum, nickel, and stainless steel.

Optionally, in some embodiments of the present application, a thickness h1 of the first connecting portion satisfies 0.03 mm ≤ h1 ≤ 1.00 mm, which is beneficial for reducing the space occupied by the first connecting portion.

Optionally, in some embodiments of the present application, the first sealing portion is provided with a first sealing portion opening. The first sealing portion opening communicates with the first opening. By providing the first sealing portion opening, it facilitates faster pressure relief, reduces the risk of the melted first sealing portion blocking the first through-hole, and helps reduce material costs.

Optionally, in some embodiments of the present application, the second seal includes a second sealing portion. The second sealing portion is adhesively bonded to the housing, which can reduce material costs and process steps.

Optionally, in some embodiments of the present application, the second seal includes a second sealing portion and a second connecting portion. The second connecting portion is adhesively bonded to the second sealing portion. The second sealing portion is adhesively bonded to the housing. By providing the second connecting portion, it is possible to reduce the infiltration of water or water vapor into the accommodating space through the second sealing portion, thereby reducing the risk of short-circuiting.

Optionally, in some embodiments of the present application, the second seal includes a second connecting portion, a second sealing portion, and a second fixing portion. Two sides of the second sealing portion are connected to the second connecting portion and the second fixing portion. The second fixing portion is connected to the housing. The second fixing portion is provided with a second opening. The second opening communicates with the second through-hole. The second fixing portion can enhance the connection strength between the second seal and the housing, reducing the risk of gas leakage.

Optionally, in some embodiments of the present application, an area of the second opening is greater than an area of the first opening, increasing the pressure relief area, which is beneficial for pressure relief.

Optionally, in some embodiments of the present application, an area S2 of the second opening satisfies 0.07 mm² ≤ S2 ≤ 25 mm². The larger the pressure relief area S2, the higher the pressure relief rate, on the basis that the pressure relief rate corresponding to the pressure relief area S2 is not less than the gas generation rate, enabling rapid pressure relief, discharging gas and heat, and reducing the risk of short-circuiting between the battery cell and the housing due to further deformation of the housing.

Optionally, in some embodiments of the present application, a diameter d1 of the first opening satisfies 0.1 mm ≤ d1 ≤ 4 mm, which can reduce the entry of water or water vapor into the accommodating space while ensuring the pressure relief effect, thereby reducing the risk of short-circuiting.

Optionally, in some embodiments of the present application, a diameter d2 of the second opening satisfies 0.3 mm ≤ d2 ≤ 5 mm, which can reduce the entry of water or water vapor into the accommodating space while ensuring the pressure relief effect, thereby reducing the risk of short-circuiting.

Optionally, in some embodiments of the present application, along the first direction, a projected area of the second through-hole is greater than or equal to a projected area of the first through-hole, ensuring the pressure relief area and pressure relief rate of the battery module at the second temperature.

Optionally, in some embodiments of the present application, a diameter D1 of the first through-hole satisfies 0.5 mm ≤ D1 ≤ 5.5 mm.

Optionally, in some embodiments of the present application, a diameter D2 of the second through-hole satisfies 0.5 mm ≤ D2 ≤ 5.5 mm.

Optionally, in some embodiments of the present application, the first temperature T1 satisfies 95°C ≤ T1 ≤ 125°C, enabling pressure relief.

Optionally, in some embodiments of the present application, the first temperature T1 satisfies 105°C ≤ T1 ≤ 120°C, which can reduce gas leakage during normal use of the battery module, benefiting the stability of the battery module during normal use and enabling timely pressure relief when the first temperature is reached.

Optionally, in some embodiments of the present application, the second temperature T2 satisfies 115°C ≤ T2 ≤ 145°C, enabling pressure relief.

Optionally, in some embodiments of the present application, the second temperature T2 satisfies 120°C ≤ T2 ≤ 135°C, which can reduce gas leakage during normal use of the battery module, benefiting the stability of the battery module during normal use and enabling timely pressure relief when the second temperature is reached.

Optionally, in some embodiments of the present application, the housing is provided with a first recess formed from the outside to the inside. The first through-hole penetrates a portion of a bottom surface of the first recess. The first seal is disposed in the first recess. The first seal does not protrude beyond a surface of the housing, facilitating the connection of the electrical connector with external devices and reducing the space occupied by the first seal.

Optionally, in some embodiments of the present application, the housing is provided with a second recess formed from the outside to the inside. The second through-hole penetrates a portion of a bottom surface of the second recess. The second seal is disposed in the second recess. The second seal does not protrude beyond a surface of the housing, facilitating the connection of the electrical connector with external devices and further reducing the space occupied by the second seal.

Optionally, in some embodiments of the present application, a height by which the first seal protrudes from the first side wall is less than a height by which the electrical connector protrudes from the first side wall. A height by which the second seal protrudes from the first side wall is less than the height by which the electrical connector protrudes from the first side wall, facilitating the connection of the electrical connector with external devices and reducing the space occupied by the first seal.

Optionally, in some embodiments of the present application, the second connecting portion and the second fixing portion include at least one metal material selected from aluminum, nickel, and stainless steel.

An embodiment of the present application also provides an electric device including the battery according to any one of the above embodiments.

An embodiment of the present application also provides a seal for sealing a battery module housing, the seal including a sealing portion and a connecting portion. The connecting portion is adhesively bonded to the sealing portion, the sealing portion is a sealant, and the sealing portion is configured to lose adhesion and/or melt when a temperature reaches a first temperature, facilitating pressure relief and improving the safety and reliability of pressure relief of the battery module.

Optionally, in some embodiments of the present application, the seal further includes a fixing portion, the fixing portion is disposed on a side of the sealing portion facing away from the connecting portion, and the fixing portion is provided with an opening.

Optionally, in some embodiments of the present application, the first temperature is from 95°C to 125°C or from 115°C to 145°C.

Optionally, in some embodiments of the present application, a material of the sealing portion includes any one of polypropylene, polyethylene, polyvinylidene fluoride, or polytetrafluoroethylene.

Optionally, in some embodiments of the present application, the connecting portion and the fixing portion include at least one metal material selected from aluminum, nickel, and stainless steel.

Optionally, in some embodiments of the present application, a shape of the seal includes any one of a racetrack shape, an elliptical shape, a rectangular shape, a circular shape, or a ring shape.

### BRIEF DESCRIPTION OF DRAWINGS

FIG. 1 shows a schematic structural diagram of a battery module in some embodiments.
FIG. 2 shows an exploded schematic diagram of a battery module in some embodiments.
FIG. 3 shows a schematic structural diagram of a portion of a housing in some embodiments.
FIG. 4 shows a schematic structural diagram of a first seal in some embodiments.
FIG. 5 shows a schematic structural diagram of a second seal in some embodiments.
FIG. 6 shows a schematic structural diagram of a battery module in other embodiments.
FIG. 7 shows an exploded schematic diagram of the battery module in FIG. 6.
FIG. 8 shows a schematic cross-sectional diagram of a first sealing portion in some embodiments.
FIG. 9 shows a schematic structural diagram of the battery module in FIG. 6 from another perspective.
FIG. 10 shows a schematic cross-sectional diagram of the battery module in FIG. 6.
FIG. 11 shows a schematic structural diagram of a battery module in still other embodiments.
FIG. 12 shows a schematic structural diagram of the battery module in FIG. 11 from another perspective.
FIG. 13 shows a schematic cross-sectional diagram of the battery module in FIG. 12.
FIG. 14 shows a schematic structural diagram of the first seal in FIG. 11.
FIG. 15 shows a schematic structural diagram of a first sealing portion in some embodiments.
FIG. 16 shows a schematic structural diagram of a first side wall in other embodiments.
FIG. 17 shows a schematic structural diagram of a seal in some embodiments.
FIG. 18 shows a schematic structural diagram of an electric device in some embodiments.

### Description of reference signs:

| | |
|---|---|
| Battery module | 100 |
| Electrical connector | 100a |
| Housing | 10 |
| First through-hole | 10a |
| Second through-hole | 10b |
| Accommodating space | 10c |
| First space | 10d |
| First recess | 10e |
| Second recess | 10f |
| Bottom wall | 11 |
| Side wall | 12 |
| First side wall | 121 |
| Second side wall | 122 |
| Third side wall | 123 |
| Fourth side wall | 124 |
| Top wall | 13 |
| Battery cell | 20 |
| Electrode terminal | 21 |
| Electrode assembly | 22 |
| First seal | 30 |
| First sealing portion | 31 |
| First sealing portion opening | 31a |
| First support layer | 311 |
| First adhesive layer | 312 |
| Second adhesive layer | 313 |
| First connecting portion | 32 |
| First fixing portion | 33 |
| First opening | 331 |
| Second seal | 40 |
| Second sealing portion | 41 |
| Second sealing portion opening | 41a |
| Second connecting portion | 42 |
| Second fixing portion | 43 |
| Second opening | 431 |
| Seal | 101 |
| Sealing portion | 101a |
| Connecting portion | 101b |
| Fixing portion | 101c |
| Opening | 101d |
| Electric device | 200 |
| First direction | X |
| Second direction | Y |
| Third direction | Z |

The following specific embodiments, in conjunction with the above drawings, further describe the present application.

### DETAILED DESCRIPTION

The following specific embodiments are exemplary and not restrictive, and are intended to provide a basic understanding of the present application, and are not intended to confirm key or decisive elements of the present application or to limit the scope of protection. As long as there is no structural conflict, the technical features mentioned in each embodiment can be combined in any manner.

When a component is described as being "disposed on" another component, it may be directly disposed on the other component, or there may be an intervening component. When a component is described as being "connected to" another component, it may be directly connected to the other component, or there may be an intervening component.

It can be understood that the term "perpendicular" is used to describe an ideal state between two components. In actual production or use, there may be a state that is approximately perpendicular or equal. For example, in combination with numerical descriptions, perpendicular may refer to an angle range between two straight lines of 90° ± 10°, perpendicular may also refer to a dihedral angle range between two planes of 90° ± 10°, and perpendicular may also refer to an angle range between a straight line and a plane of 90° ± 10°. The two components described as "perpendicular" may not be absolute straight lines or planes, and may be roughly straight lines or planes, and can be considered as "straight lines" or "planes" as long as their overall extension direction is macroscopically straight or planar.

Unless otherwise defined, the term "multiple" when used to describe the number of components specifically refers to two or more of the components.

During the first charge and discharge process of a liquid lithium-ion battery, the electrolyte reacts at the solid-liquid interface with the electrode, forming a passivation layer covering the surface of the electrode material. This passivation layer is an interface layer with the characteristics of a solid electrolyte, is an electronic insulator but an excellent conductor of lithium ions, and lithium ions can freely intercalate and deintercalate through this passivation layer. Therefore, this passivation film is referred to as the "solid electrolyte interface" (solid electrolyte interface) film, abbreviated as SEI film.

The following, in conjunction with the drawings, describes some embodiments of the present application. In the absence of conflict, the embodiments and features in the embodiments described below can be combined with each other.

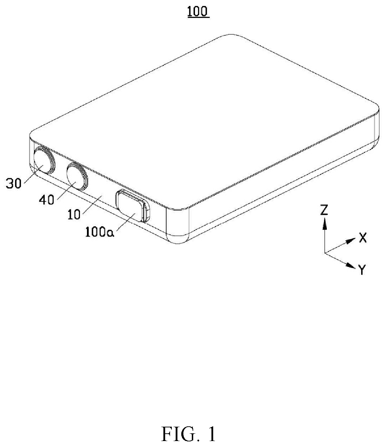

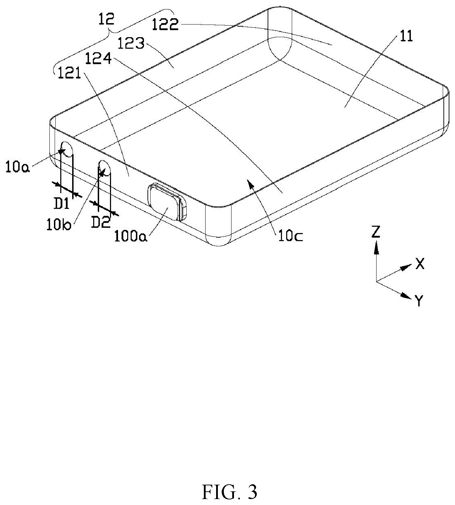

Referring to FIG. 1, FIG. 2, and FIG. 3, an embodiment of the present application provides a battery module 100 including a housing 10, a battery cell 20, a first seal 30, and a second seal 40. The housing 10 is provided with a first through-hole 10a, a second through-hole 10b, and an accommodating space 10c. The first through-hole 10a communicates with the accommodating space 10c, and the second through-hole 10b communicates with the accommodating space 10c. The battery cell 20 is disposed in the accommodating space 10c. The first seal 30 is connected to the housing 10 and seals the first through-hole 10a. The second seal 40 is connected to the housing 10 and seals the second through-hole 10b. The first seal 30 is configured to melt and/or lose adhesion to form a first pressure relief channel when an internal temperature of the battery module 100 reaches a first temperature. The second seal 40 is configured to melt and/or lose adhesion to form a second pressure relief channel when an internal temperature of the battery module 100 reaches a second temperature, the second temperature being greater than the first temperature.

The higher the temperature of the battery module 100, the higher the gas generation rate. The present application, by providing the first through-hole 10a and the second through-hole 10b, where the second temperature of the second seal 40 is greater than the first temperature of the first seal 30, can match different gas generation rates of the battery module 100 at different temperatures, facilitating pressure relief. By providing the first seal 30 at the first through-hole 10a and the second seal 40 at the second through-hole 10b, sufficient pressure relief area can be ensured. At the first temperature, it is beneficial to reduce the pressure relief area of the battery module 100, thereby reducing the risk of external water vapor and oxygen entering the battery cell 20 during pressure relief of the battery module 100 at the first temperature, the entry of which could accelerate side reactions of the battery cell 20 and lead to intensified combustion. At the second temperature, the second pressure relief channel can increase the pressure relief area and pressure relief rate, reducing the risk of short-circuiting between the battery cell 20 and the housing 10, thereby improving the safety and reliability of pressure relief of the battery module 100.

In some embodiments, the first temperature T1 satisfies 95°C ≤ T1 ≤ 125°C. The first seal 30 is configured to transition to a molten state at any temperature within the T1 range, forming a first pressure relief channel, and the accommodating space 10c communicates with the external environment through the first through-hole 10a and the first pressure relief channel, thereby enabling pressure relief. T1 may be any one of 95°C, 96°C, 97°C, 98°C, 99°C, 100°C, 101°C, 102°C, 103°C, 104°C, 105°C, 106°C, 107°C, 108°C, 109°C, 110°C, 111°C, 112°C, 113°C, 114°C, 115°C, 116°C, 117°C, 118°C, 119°C, 120°C, 121°C, 122°C, 123°C, 124°C, or 125°C.

In some embodiments, T1 satisfies 105°C ≤ T1 ≤ 120°C, which can reduce gas leakage during normal use of the battery module 100, benefiting the stability of the battery module 100 during normal use and enabling timely pressure relief when the first temperature is reached. T1 may be any one of 105°C, 106°C, 107°C, 108°C, 109°C, 110°C, 111°C, 112°C, 113°C, 114°C, 115°C, 116°C, 117°C, 118°C, 119°C, or 120°C.

In other embodiments, the first seal 30 is configured to begin melting at the lowest temperature within the T1 range, forming a partial first pressure relief channel, and to transition to a molten state at the highest temperature, forming a complete first pressure relief channel. The accommodating space 10c communicates with the external environment through the first through-hole 10a and the first pressure relief channel, enabling pressure relief.

In still other embodiments, the first seal 30 is configured such that, at the lowest temperature within the T1 range, the adhesive strength of the first seal 30 decreases, and part or all of the first seal 30 detaches, forming a partial first pressure relief channel, thereby enabling pressure relief.

It can be understood that the partial detachment of the first seal 30 and the melting of the first seal 30 may occur simultaneously.

In some embodiments, the second temperature T2 satisfies 115°C ≤ T2 ≤ 145°C. The second seal 40 is configured to transition to a molten state at any temperature within the T2 range, forming a second pressure relief channel, and the accommodating space 10c communicates with the external environment through the second through-hole 10b and the second pressure relief channel, further enabling pressure relief. T2 may be any one of 115°C, 116°C, 117°C, 118°C, 119°C, 120°C, 121°C, 122°C, 123°C, 124°C, 125°C, 126°C, 127°C, 128°C, 129°C, 130°C, 131°C, 132°C, 133°C, 134°C, 135°C, 136°C, 137°C, 138°C, 139°C, 140°C, 141°C, 142°C, 143°C, 144°C, or 145°C.

In some embodiments, T2 satisfies 120°C ≤ T1 ≤ 135°C, which can reduce gas leakage during normal use of the battery module 100, benefiting the stability of the battery module 100 during normal use and enabling timely pressure relief when the second temperature is reached. T2 may be any one of 120°C, 121°C, 122°C, 123°C, 124°C, 125°C, 126°C, 127°C, 128°C, 129°C, 130°C, 131°C, 132°C, 133°C, 134°C, or 135°C.

In other embodiments, the second seal 40 is configured to begin melting at the lowest temperature within the T2 range, forming a partial second pressure relief channel, and to transition to a molten state at the highest temperature, forming a complete second pressure relief channel, whereby the accommodating space 10c communicates with the external environment through the second through-hole 10b and the second pressure relief channel, enabling pressure relief.

In still other embodiments, the second seal 40 is configured such that, at the lowest temperature within the T2 range, the adhesive strength of the second seal 40 decreases, and part or all of the second seal 40 detaches, forming a partial second pressure relief channel, thereby enabling pressure relief.

It can be understood that the partial detachment of the second seal 40 and the melting of the second seal 40 may occur simultaneously.

In some embodiments, the battery module 100 includes a third seal (not shown), and the housing 10 is provided with a third through-hole, the third through-hole communicating with the accommodating space 10c. The third seal is connected to the housing 10 and seals the third through-hole. The third seal is configured to melt to form a third pressure relief channel when the internal temperature of the battery module 100 reaches a third preset temperature. The third preset temperature is between the first temperature and the second temperature, or the third preset temperature is greater than the second temperature. It can be understood that the number of through-holes and corresponding seals can be adjusted according to pressure relief requirements.

Referring to FIG. 1 to FIG. 3, the housing 10 includes a bottom wall 11, a side wall 12, and a top wall 13. The side wall 12 connects the bottom wall 11 and the top wall 13, forming the accommodating space.

In some embodiments, the shape of the first seal 30 includes any one of a racetrack shape, an elliptical shape, a rectangular shape, a circular shape, or a ring shape, to adapt to the thickness of the side wall 12.

In some embodiments, the shape of the second seal 40 includes any one of a racetrack shape, an elliptical shape, a rectangular shape, a circular shape, or a ring shape, to adapt to the thickness of the side wall 12.

In some embodiments, the first through-hole 10a penetrates either the bottom wall 11 or the top wall 13.

In some embodiments, the second through-hole 10b penetrates either the bottom wall 11 or the top wall 13.

In some embodiments, the first seal 30 and the side wall 12 are arranged along the first direction X, and the first through-hole 10a penetrates the side wall 12. Providing the first through-hole 10a on the side wall 12 can reduce the risk of the battery cell 20 blocking the first through-hole 10a, facilitating pressure relief.

In some embodiments, the second seal 40 and the side wall 12 are arranged along the first direction X, and the second through-hole 10b penetrates the side wall 12. Providing the second through-hole 10b on the side wall 12 can reduce the risk of the battery cell 20 blocking the second through-hole 10b, further facilitating pressure relief.

In some embodiments, the first direction X is the length direction or width direction of the battery module 100. The present application takes the first direction X as the length direction of the battery module 100 as an example for description.

In some embodiments, the side wall 12 includes a first side wall 121, a second side wall 122, a third side wall 123, and a fourth side wall 124. The first side wall 121 and the second side wall 122 are arranged along the first direction X, and the third side wall 123 and the fourth side wall 124 are arranged along the second direction Y. The first side wall 121 connects the third side wall 123 and the fourth side wall 124, and the second side wall 122 connects the third side wall 123 and the fourth side wall 124. The first direction X is perpendicular to the second direction Y.

In some embodiments, the bottom wall 11 and the top wall 13 are arranged along the third direction Z. The bottom wall 11 connects the first side wall 121, the second side wall 122, the third side wall 123, and the fourth side wall 124, and the top wall 13 connects the first side wall 121, the second side wall 122, the third side wall 123, and the fourth side wall 124. The first direction X, the second direction Y, and the third direction Z are pairwise perpendicular.

In some embodiments, the first through-hole 10a is provided on any one of the first side wall 121, the second side wall 122, the third side wall 123, or the fourth side wall 124.

In some embodiments, the second through-hole 10b is provided on any one of the first side wall 121, the second side wall 122, the third side wall 123, or the fourth side wall 124.

In some embodiments, the battery module 100 includes an electrical connector 100a. The electrical connector 100a is connected to the battery cell 20 and extends from the first side wall 121. The first through-hole 10a penetrates the first side wall 121, and the second through-hole 10b penetrates the first side wall 121. A first space 10d is provided between the first side wall 121 and the battery cell 20. Along the first direction X, the distance between the first side wall 121 and the battery cell 20 is greater than the distance between any one of the second side wall 122, the third side wall 123, or the fourth side wall 124 and the battery cell 20. By arranging the first through-hole 10a and the second through-hole 10b on the same side wall as the electrical connector 100a, utilizing the first space 10d, it facilitates pressure relief. Optionally, the electrical connector 100a includes a pole. In some embodiments, the first through-hole 10a and the second through-hole 10b, together with the electrical connector 100a, may also be provided on any one of the second side wall 122, the third side wall 123, or the fourth side wall 124.

In some embodiments, the battery module 100 includes a protective plate (not shown), and the protective plate is disposed on the side where the electrical connector 100a is located. The first through-hole 10a penetrates the second side wall 122, and the second through-hole 10b penetrates the second side wall 122, making the first through-hole 10a and the second through-hole 10b distant from the protective plate, which is beneficial for protecting the protective plate during pressure relief or when external water vapor enters the housing 10, reducing the risk of short-circuiting of the protective plate. Optionally, the first through-hole 10a penetrates the third side wall 123, and the second through-hole 10b penetrates the third side wall 123. Optionally, the first through-hole 10a penetrates the fourth side wall 124, and the second through-hole 10b penetrates the fourth side wall 124.

In some embodiments, a height by which the first seal 30 protrudes from the first side wall 121 is less than a height by which the electrical connector 100a protrudes from the first side wall 121, facilitating the connection of the electrical connector 100a with external devices and reducing the space occupied by the first seal 30.

In some embodiments, a height by which the second seal 40 protrudes from the first side wall 121 is less than the height by which the electrical connector 100a protrudes from the first side wall 121, facilitating the connection of the electrical connector 100a with external devices and further reducing the space occupied by the second seal 40.

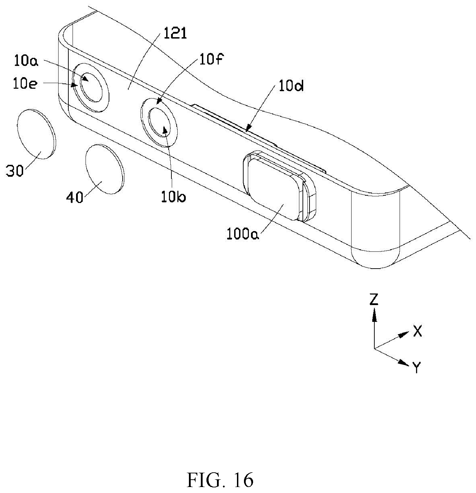

Referring to FIG. 16, in some embodiments, the housing 10 is provided with a first recess 10e formed from the outside to the inside. The first through-hole 10a penetrates a portion of a bottom surface of the first recess 10e. The first seal 30 is disposed in the first recess 10e. The first seal 30 does not protrude beyond a surface of the housing 10, further facilitating the connection of the electrical connector 100a with external devices and further reducing the space occupied by the first seal 30. Optionally, the first recess 10e is provided on the first side wall 121. Optionally, the first recess 10e is provided on any one of the second side wall 122, the third side wall 123, or the fourth side wall 124.

Referring to FIG. 16, in some embodiments, the housing 10 is provided with a second recess 10f formed from the outside to the inside. The second through-hole 10b penetrates a portion of a bottom surface of the second recess 10f. The second seal 40 is disposed in the second recess 10f. The second seal 40 does not protrude beyond a surface of the housing 10, further facilitating the connection of the electrical connector 100a with external devices and further reducing the space occupied by the second seal 40. Optionally, the second recess 10f is provided on the first side wall 121. Optionally, the second recess 10f is provided on any one of the second side wall 122, the third side wall 123, or the fourth side wall 124.

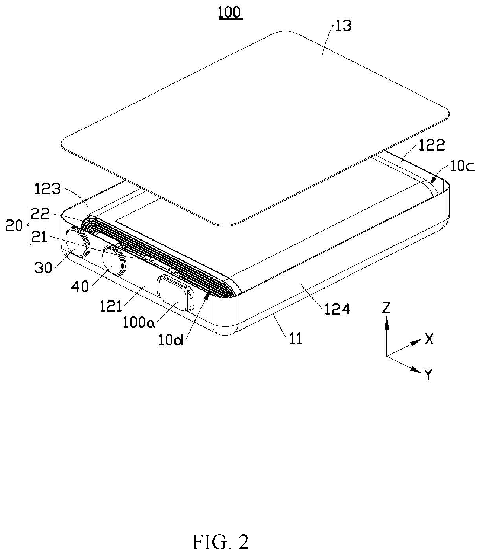

Referring to FIG. 2, in some embodiments, the battery cell 20 includes an electrode terminal 21 and an electrode assembly 22. The electrode assembly 22 is disposed in the accommodating space 10c, and the electrode terminal 21 is connected to the electrode assembly 22.

In some embodiments, the electrode assembly 22 is formed by sequentially stacking and winding a positive electrode plate, a separator, and a negative electrode plate. In other embodiments, the electrode assembly 22 may also be a laminated structure, where a positive electrode plate, a separator, and a negative electrode plate are sequentially stacked to form an electrode assembly unit, and multiple electrode assembly units are stacked to form the electrode assembly 22.

In some embodiments, the electrode terminal 21 electrically connects the negative electrode plate and the electrical connector 100a, the positive electrode plate electrically connects to the housing 10, and the electrical connector 100a is insulated from the housing 10. Optionally, the electrode terminal 21 is welded to the negative electrode plate and the electrical connector 100a. Optionally, the welding includes laser welding, ultrasonic welding, or the like.

In some embodiments, the electrode terminal 21 electrically connects the positive electrode plate and the electrical connector 100a, the negative electrode plate electrically connects to the housing 10, and the electrical connector 100a is insulated from the housing 10. Optionally, the electrode terminal 21 is welded to the positive electrode plate and the electrical connector 100a. Optionally, the welding includes laser welding, ultrasonic welding, or the like.

In some embodiments, the electrode terminal 21 may be provided in multiple, and the battery module 100 includes an adapter. One end of the adapter electrically connects to multiple electrode terminals 21, and another end of the adapter electrically connects to the electrical connector 100a. Optionally, the welding includes laser welding, ultrasonic welding, or the like.

In some embodiments, the battery module 100 includes an insulating adhesive, and the insulating adhesive is disposed between the electrode terminal 21 and the housing 10, reducing the risk of short-circuiting.

In some embodiments, the insulating adhesive is disposed between the adapter and the housing 10, further reducing the risk of short-circuiting.

### Embodiment 1

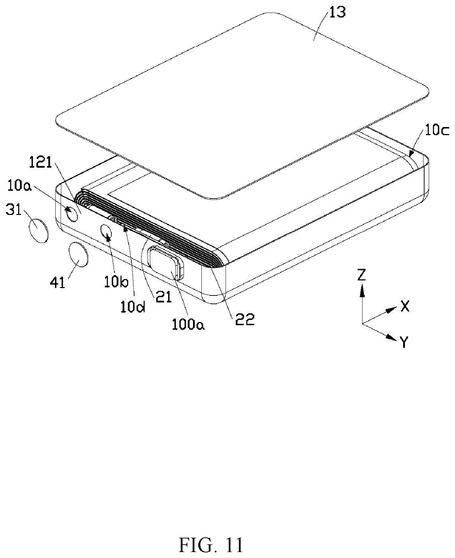

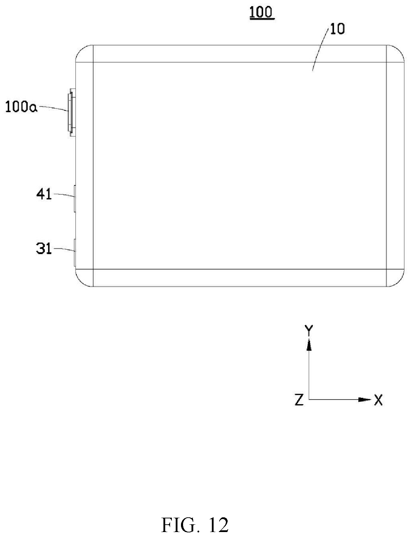

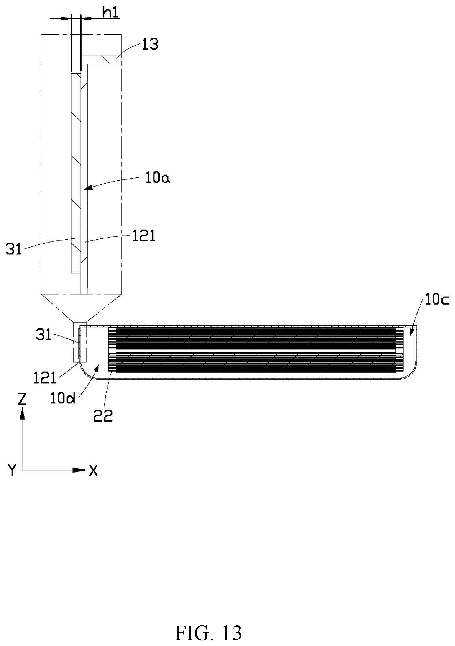

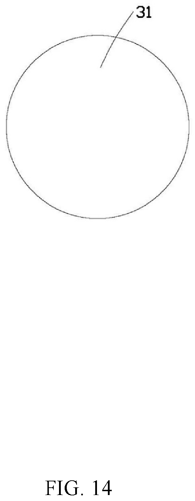

Referring to FIG. 11 to FIG. 15, in some embodiments, the first seal 30 includes a first sealing portion 31. The first sealing portion 31 is adhesively bonded to the housing 10, which can reduce material costs and process steps. Optionally, the first sealing portion 31 is adhesively bonded to the first side wall 121 and seals the first through-hole 10a. Optionally, the first sealing portion 31 includes a sealant.

In some embodiments, the height by which the first sealing portion 31 protrudes from the first side wall 121 is less than the height by which the electrical connector 100a protrudes from the first side wall 121, facilitating the connection of the electrical connector 100a with external devices.

In some embodiments, a thickness W1 of the first sealing portion 31 satisfies 0.02 mm ≤ W1 ≤ 1 mm, which is beneficial for reducing the space occupied by the first sealing portion 31. W1 may be any one of 0.02 mm, 0.03 mm, 0.04 mm, 0.05 mm, 0.06 mm, 0.07 mm, 0.08 mm, 0.09 mm, 0.10 mm, ..., 0.91 mm, 0.92 mm, 0.93 mm, 0.94 mm, 0.95 mm, 0.96 mm, 0.97 mm, 0.98 mm, 0.99 mm, or 1.0 mm.

In some embodiments, the thickness W1 of the first sealing portion 31 satisfies 0.1 mm ≤ W1 ≤ 0.3 mm, which is beneficial for reducing the space occupied by the first sealing portion 31 and facilitating process production. W1 may be any one of 0.10 mm, 0.11 mm, 0.12 mm, 0.13 mm, 0.14 mm, 0.15 mm, 0.16 mm, 0.17 mm, 0.18 mm, 0.19 mm, 0.20 mm, 0.21 mm, 0.22 mm, 0.23 mm, 0.24 mm, 0.25 mm, 0.26 mm, 0.27 mm, 0.28 mm, 0.29 mm, or 0.30 mm.

In some embodiments, the first sealing portion 31 is configured to provide a sealing function when the internal temperature of the battery module 100 has not reached the first temperature T1. When the internal temperature of the battery module 100 reaches the first temperature T1, the first sealing portion 31 transitions to a molten state, allowing the accommodating space 10c to communicate with the outside through the first through-hole 10a, enabling pressure relief. In this embodiment, the area of the first through-hole 10a is the pressure relief area.

In some embodiments, the first through-hole 10a is configured to be circular, and the diameter D1 of the first through-hole 10a satisfies 0.5 mm ≤ D1 ≤ 5.5 mm. D1 may be any one of 0.5 mm, 0.7 mm, 0.9 mm, 1.1 mm, 1.3 mm, 1.5 mm, 1.7 mm, 1.9 mm, 2.1 mm, 2.3 mm, 2.5 mm, 2.7 mm, 2.9 mm, 3.1 mm, 3.3 mm, 3.5 mm, 3.7 mm, 3.9 mm, 4.1 mm, 4.3 mm, 4.5 mm, 4.7 mm, 4.9 mm, 5.1 mm, 5.3 mm, or 5.5 mm.

In other embodiments, the first through-hole 10a may be configured to have other shapes, such as triangular, rectangular, elliptical, or the like.

In some embodiments, a material of the first sealing portion 31 includes any one of polypropylene (PP), polyethylene (PE), polyvinylidene fluoride (PVDF), or polytetrafluoroethylene (PTFE). In other embodiments, the material of the first sealing portion 31 may also be other materials, as long as it can seal the first through-hole 10a and enable pressure relief when the internal temperature of the battery module 100 reaches the first temperature T1.

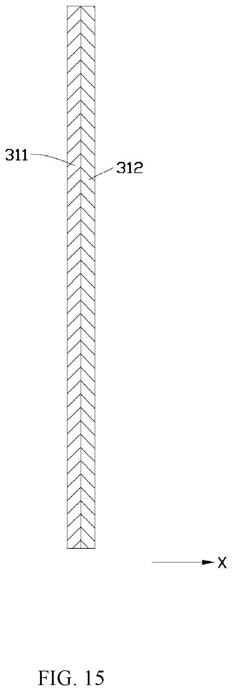

Referring to FIG. 15, in some embodiments, the first sealing portion 31 includes a first support layer 311 and a first adhesive layer 312. The first adhesive layer 312 adhesively bonds the first support layer 311 and the housing 10.

In some embodiments, the second seal 40 includes a second sealing portion 41. The second sealing portion 41 is adhesively bonded to the housing 10, which can reduce material costs and process steps. Optionally, the second sealing portion 41 is adhesively bonded to the first side wall 121 and seals the second through-hole 10b. Optionally, the second sealing portion 41 includes a sealant.

In some embodiments, the height by which the second sealing portion 41 protrudes from the first side wall 121 is less than the height by which the electrical connector 100a protrudes from the first side wall 121, facilitating the connection of the electrical connector 100a with external devices.

In some embodiments, the thickness W2 of the second sealing portion 41 satisfies 0.02 mm ≤ W2 ≤ 1 mm, which is beneficial for reducing the space occupied by the second sealing portion 41. W2 may be any one of 0.02 mm, 0.03 mm, 0.04 mm, 0.05 mm, 0.06 mm, 0.07 mm, 0.08 mm, 0.09 mm, 0.10 mm, ..., 0.91 mm, 0.92 mm, 0.93 mm, 0.94 mm, 0.95 mm, 0.96 mm, 0.97 mm, 0.98 mm, 0.99 mm, or 1.0 mm.

In some embodiments, the thickness W2 of the second sealing portion 41 satisfies 0.1 mm ≤ W2 ≤ 0.3 mm, which is beneficial for reducing the space occupied by the second sealing portion 41 and facilitating process production. W2 may be any one of 0.10 mm, 0.11 mm, 0.12 mm, 0.13 mm, 0.14 mm, 0.15 mm, 0.16 mm, 0.17 mm, 0.18 mm, 0.19 mm, 0.20 mm, 0.21 mm, 0.22 mm, 0.23 mm, 0.24 mm, 0.25 mm, 0.26 mm, 0.27 mm, 0.28 mm, 0.29 mm, or 0.30 mm.

In some embodiments, the second sealing portion 41 is configured to provide a sealing function when the internal temperature of the battery module 100 has not reached the second temperature T2. When the internal temperature of the battery module 100 reaches the second temperature T2, the second sealing portion 41 transitions to a molten state, allowing the accommodating space 10c to communicate with the outside through the second through-hole 10b, enabling pressure relief. In this embodiment, the area of the second through-hole 10b is the pressure relief area.

In some embodiments, along the first direction X, a projected area of the second through-hole 10b is greater than or equal to a projected area of the first through-hole 10a, which can increase the pressure relief rate, facilitating pressure relief.

In some embodiments, the second through-hole 10b is configured to be circular, and a diameter D2 of the second through-hole 10b satisfies 0.5 mm ≤ D2 ≤ 5.5 mm. D2 may be any one of 0.5 mm, 0.7 mm, 0.9 mm, 1.1 mm, 1.3 mm, 1.5 mm, 1.7 mm, 1.9 mm, 2.1 mm, 2.3 mm, 2.5 mm, 2.7 mm, 2.9 mm, 3.1 mm, 3.3 mm, 3.5 mm, 3.7 mm, 3.9 mm, 4.1 mm, 4.3 mm, 4.5 mm, 4.7 mm, 4.9 mm, 5.1 mm, 5.3 mm, or 5.5 mm.

In other embodiments, the second through-hole 10b may be configured to have other shapes, such as triangular, rectangular, elliptical, or the like.

In some embodiments, a material of the second sealing portion 41 includes any one of polypropylene (PP), polyethylene (PE), polyvinylidene fluoride (PVDF), or polytetrafluoroethylene (PTFE). In other embodiments, the material of the second sealing portion 41 may also be other materials, as long as it can seal the second through-hole 10b and enable pressure relief when the internal temperature of the battery module 100 reaches the second temperature T2.

In some embodiments, the structure of the second sealing portion 41 is the same as the structure of the first sealing portion 31 in the above embodiments, and will not be repeated here.

### Embodiment 2

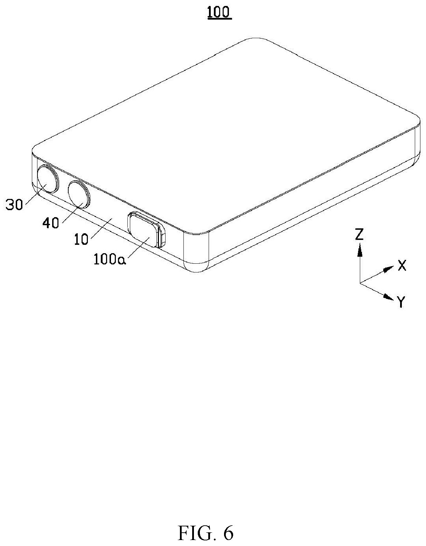

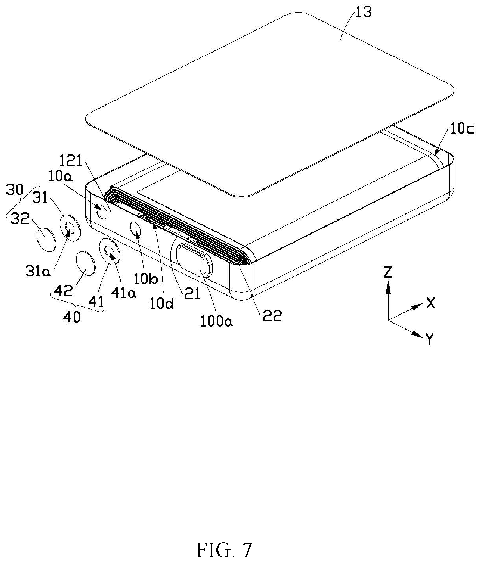

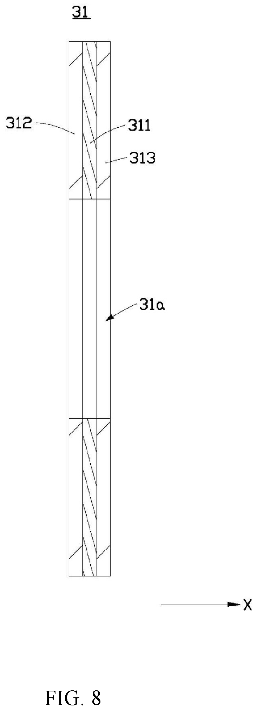

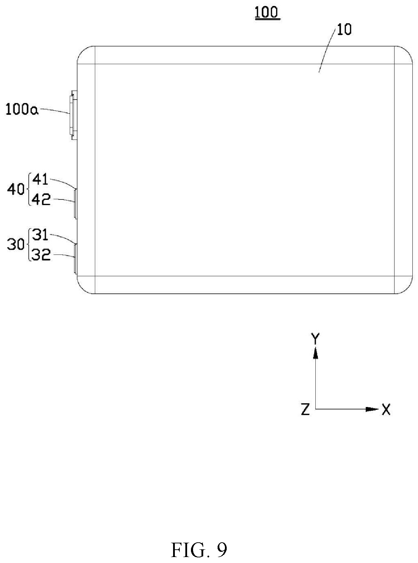

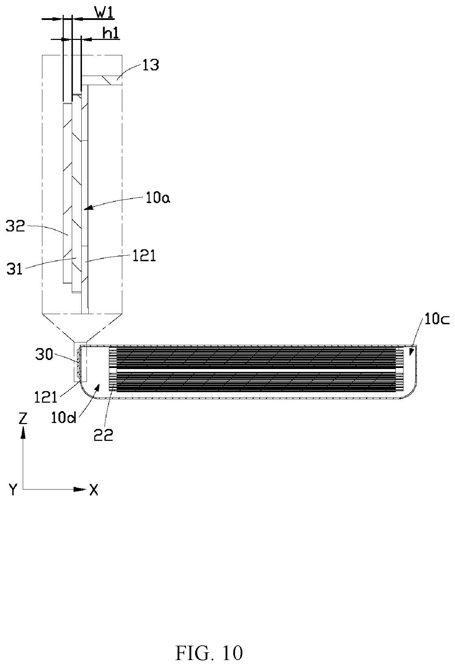

Referring to FIG. 6 to FIG. 10, in some embodiments, the first seal 30 includes a first sealing portion 31 and a first connecting portion 32. The first connecting portion 32 is adhesively bonded to the first sealing portion 31, and the first sealing portion 31 is adhesively bonded to the housing 10. Optionally, the first sealing portion 31 is adhesively bonded to the first side wall 121 and seals the first through-hole 10a. Optionally, the first sealing portion 31 includes a sealant. Along the first direction X, the projection of the first connecting portion 32 overlaps with the projection of the first sealing portion 31. By providing the first connecting portion 32, it is possible to reduce the infiltration of water or water vapor into the accommodating space 10c through the first sealing portion 31, reducing the risk of short-circuiting.

In some embodiments, along the first direction X, the projection of the first connecting portion 32 overlaps with the projection of the first sealing portion 31, further reducing the infiltration of water or water vapor into the accommodating space 10c through the first sealing portion 31, further reducing the risk of short-circuiting.

In some embodiments, along the first direction X, the projection of the first connecting portion 32 is located within the projection of the first sealing portion 31, and the projection of the first through-hole 10a is located within the projection of the first connecting portion 32. Specifically, when installing the first seal 30, by pressing, the first sealing portion 31 overflows the edge of the first connecting portion 32, which is beneficial for the first sealing portion 31 to fill the gap between the housing 10 and the first connecting portion 32, reducing the entry of water or water vapor into the accommodating space 10c through the gap, and the first connecting portion 32 can reduce the infiltration of water or water vapor, further reducing the risk of short-circuiting.

In some embodiments, the first sealing portion 31 is configured to provide a sealing function when the internal temperature of the battery module 100 has not reached the first temperature T1. When the internal temperature of the battery module 100 reaches the first temperature T1, the first sealing portion 31 transitions to a molten state, allowing the accommodating space 10c to communicate with the outside through the first through-hole 10a, enabling pressure relief.

In some embodiments, the first sealing portion 31 includes a first support layer 311, a first adhesive layer 312, and a second adhesive layer 313. The first adhesive layer 312 and the second adhesive layer 313 adhesively bond opposite sides of the first support layer 311. The first adhesive layer 312 adhesively bonds the first side wall 121, and the second adhesive layer adhesively bonds the first connecting portion 32.

In some embodiments, the first sealing portion 31 is provided with a first sealing portion opening 31a. The first sealing portion opening 31a penetrates the first support layer 311, the first adhesive layer 312, and the second adhesive layer 313. The first sealing portion opening 31a communicates with the first through-hole 10a. Along the first direction X, the projection of the first sealing portion opening 31a overlaps with the projection of the first through-hole 10a. Optionally, the projection of the first through-hole 10a is located within the projection of the first sealing portion opening 31a. Optionally, the projection of the first sealing portion opening 31a overlaps with the projection of the first through-hole 10a. By providing the first sealing portion opening 31a, it facilitates faster pressure relief, reduces the risk of the melted first sealing portion 31 blocking the first through-hole 10a, and helps reduce material costs.

In some embodiments, the height by which the first sealing portion 31 and the first connecting portion 32 protrude from the first side wall 121 is less than the height by which the electrical connector 100a protrudes from the first side wall 121, facilitating the connection of the electrical connector 100a with external devices.

In some embodiments, the thickness W1 of the first sealing portion 31 satisfies 0.02 mm ≤ W1 ≤ 1 mm, which is beneficial for reducing the space occupied by the first sealing portion 31. W1 may be any one of 0.02 mm, 0.03 mm, 0.04 mm, 0.05 mm, 0.06 mm, 0.07 mm, 0.08 mm, 0.09 mm, 0.10 mm, ..., 0.91 mm, 0.92 mm, 0.93 mm, 0.94 mm, 0.95 mm, 0.96 mm, 0.97 mm, 0.98 mm, 0.99 mm, or 1.0 mm.

In some embodiments, the thickness W1 of the first sealing portion 31 satisfies 0.1 mm ≤ W1 ≤ 0.3 mm, which is beneficial for reducing the space occupied by the first sealing portion 31 and facilitating process production. W1 may be any one of 0.10 mm, 0.11 mm, 0.12 mm, 0.13 mm, 0.14 mm, 0.15 mm, 0.16 mm, 0.17 mm, 0.18 mm, 0.19 mm, 0.20 mm, 0.21 mm, 0.22 mm, 0.23 mm, 0.24 mm, 0.25 mm, 0.26 mm, 0.27 mm, 0.28 mm, 0.29 mm, or 0.30 mm.

In some embodiments, a thickness h1 of the first connecting portion 32 satisfies 0.03 mm ≤ h1 ≤ 1.00 mm, which is beneficial for reducing the space occupied by the first connecting portion 32. h1 may be any one of 0.03 mm, 0.04 mm, 0.05 mm, 0.06 mm, 0.07 mm, 0.08 mm, 0.09 mm, 0.10 mm, ..., 0.91 mm, 0.92 mm, 0.93 mm, 0.94 mm, 0.95 mm, 0.96 mm, 0.97 mm, 0.98 mm, 0.99 mm, or 1.0 mm.

In some embodiments, the thickness h1 of the first connecting portion 32 satisfies 0.05 mm ≤ h1 ≤ 0.15 mm, which reduces the space occupied by the first connecting portion 32 while satisfying water resistance requirements and facilitating process production. h1 may be any one of 0.05 mm, 0.06 mm, 0.07 mm, 0.08 mm, 0.09 mm, 0.10 mm, 0.11 mm, 0.12 mm, 0.13 mm, 0.14 mm, or 0.15 mm.

In some embodiments, the first connecting portion 32 includes at least one metal material selected from aluminum, nickel, and stainless steel. In other embodiments, the first connecting portion 32 may also include other metal materials, such as at least one of copper, iron, tin, platinum, zinc, titanium, tungsten, or lead.

In some embodiments, the first connecting portion 32 is configured to be circular. In other embodiments, the first connecting portion 32 may also be configured to have other shapes, such as elliptical or rectangular.

In some embodiments, the second seal 40 includes a second sealing portion 41 and a second connecting portion 42. The second connecting portion 42 is adhesively bonded to the second sealing portion 41, and the second sealing portion 41 is adhesively bonded to the housing 10. Optionally, the second sealing portion 41 is adhesively bonded to the first side wall 121 and seals the second through-hole 10b. Optionally, the second sealing portion 41 includes a sealant. Along the first direction X, the projection of the second connecting portion 42 overlaps with the projection of the second sealing portion 41. By providing the second connecting portion 42, it is possible to reduce the infiltration of water or water vapor into the accommodating space 10c through the second sealing portion 41, reducing the risk of short-circuiting.

In some embodiments, along the first direction X, the projection of the second connecting portion 42 overlaps with the projection of the second sealing portion 41, further reducing the infiltration of water or water vapor into the accommodating space 10c through the second sealing portion 41, further reducing the risk of short-circuiting.

In some embodiments, along the first direction X, the projection of the second connecting portion 42 is located within the projection of the second sealing portion 41, and the projection of the second through-hole 10b is located within the projection of the second connecting portion 42. Specifically, when installing the second seal 40, by pressing, the second sealing portion 41 overflows the edge of the second connecting portion 42, which is beneficial for the second sealing portion 41 to fill the gap between the housing 10 and the second connecting portion 42, reducing the entry of water or water vapor into the accommodating space 10c through the gap, and the second connecting portion 42 can reduce the infiltration of water or water vapor, further reducing the risk of short-circuiting.

In some embodiments, the second sealing portion 41 is configured to provide a sealing function when the internal temperature of the battery module 100 has not reached the second temperature T2. When the internal temperature of the battery module 100 reaches the second temperature T2, the second sealing portion 41 transitions to a molten state, allowing the accommodating space 10c to communicate with the outside through the second through-hole 10b, enabling pressure relief.

In some embodiments, the structure of the second sealing portion 41 is the same as the structure of the first sealing portion 31 in the above embodiments, and will not be repeated here.

In some embodiments, the second sealing portion 41 is provided with a second sealing portion opening 41a. The first sealing portion opening 31a communicates with the second through-hole 10b. Along the first direction X, the projection of the second sealing portion opening 41a overlaps with the projection of the second through-hole 10b. Optionally, the projection of the second through-hole 10b is located within the projection of the second sealing portion opening 41a. Optionally, the projection of the second sealing portion opening 41a overlaps with the projection of the second through-hole 10b. By providing the second sealing portion opening 41a, it facilitates faster pressure relief, reduces the risk of the melted second sealing portion 41 blocking the second through-hole 10b, and helps reduce material costs.

In some embodiments, the height by which the second sealing portion 41 and the second connecting portion 42 protrude from the first side wall 121 is less than the height by which the electrical connector 100a protrudes from the first side wall 121, facilitating the connection of the electrical connector 100a with external devices.

In some embodiments, the thickness W2 of the second sealing portion 41 satisfies 0.02 mm ≤ W2 ≤ 1 mm, which is beneficial for reducing the space occupied by the second sealing portion 41. W2 may be any one of 0.02 mm, 0.03 mm, 0.04 mm, 0.05 mm, 0.06 mm, 0.07 mm, 0.08 mm, 0.09 mm, 0.10 mm, ..., 0.91 mm, 0.92 mm, 0.93 mm, 0.94 mm, 0.95 mm, 0.96 mm, 0.97 mm, 0.98 mm, 0.99 mm, or 1.0 mm.

In some embodiments, the thickness W2 of the second sealing portion 41 satisfies 0.1 mm ≤ W2 ≤ 0.3 mm, which is beneficial for reducing the space occupied by the second sealing portion 41 and facilitating process production. W2 may be any one of 0.10 mm, 0.11 mm, 0.12 mm, 0.13 mm, 0.14 mm, 0.15 mm, 0.16 mm, 0.17 mm, 0.18 mm, 0.19 mm, 0.20 mm, 0.21 mm, 0.22 mm, 0.23 mm, 0.24 mm, 0.25 mm, 0.26 mm, 0.27 mm, 0.28 mm, 0.29 mm, or 0.30 mm.

In some embodiments, a thickness h2 of the second connecting portion 42 satisfies 0.03 mm ≤ h2 ≤ 1.00 mm, which is beneficial for reducing the space occupied by the second connecting portion 42. h2 may be any one of 0.03 mm, 0.04 mm, 0.05 mm, 0.06 mm, 0.07 mm, 0.08 mm, 0.09 mm, 0.10 mm, ..., 0.91 mm, 0.92 mm, 0.93 mm, 0.94 mm, 0.95 mm, 0.96 mm, 0.97 mm, 0.98 mm, 0.99 mm, or 1.0 mm.

In some embodiments, the thickness h2 of the second connecting portion 42 satisfies 0.05 mm ≤ h2 ≤ 0.15 mm, which reduces the space occupied by the second connecting portion 42 while satisfying water resistance requirements and facilitating process production. h2 may be any one of 0.05 mm, 0.06 mm, 0.07 mm, 0.08 mm, 0.09 mm, 0.10 mm, 0.11 mm, 0.12 mm, 0.13 mm, 0.14 mm, or 0.15 mm.

In some embodiments, the second connecting portion 42 includes at least one metal material selected from aluminum, nickel, and stainless steel. In other embodiments, the second connecting portion 42 may also include other metal materials, such as at least one of copper, iron, tin, platinum, zinc, titanium, tungsten, or lead.

In some embodiments, the second connecting portion 42 is configured to be circular. In other embodiments, the second connecting portion 42 may also be configured to have other shapes, such as elliptical or rectangular.

### Embodiment 3

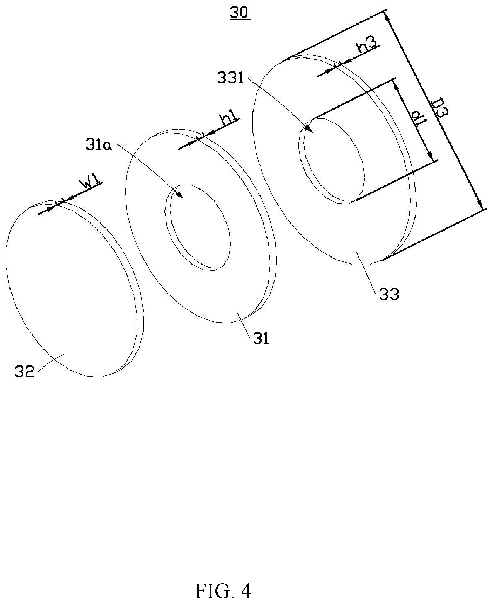

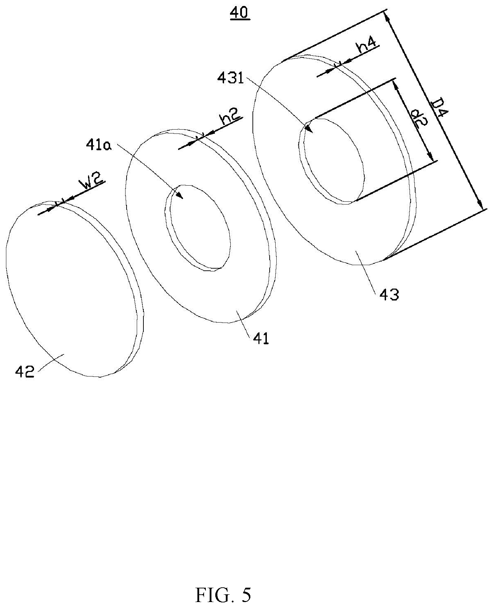

Referring to FIG. 1 to FIG. 5, in some embodiments, the first seal 30 includes a first sealing portion 31, a first connecting portion 32, and a first fixing portion 33. Two sides of the first sealing portion 31 are connected to the first connecting portion 32 and the first fixing portion 33. The first fixing portion 33 is connected to the housing 10. The first fixing portion 33 is provided with a first opening 331. The first opening 331 penetrates the first fixing portion 33, and the first opening 331 communicates with the first through-hole 10a. The first fixing portion 33 can enhance the connection strength between the first seal 30 and the housing 10, reducing the risk of gas leakage.

In some embodiments, the first sealing portion 31 in Embodiment 3 is the same as the first sealing portion 31 in Embodiment 2, and will not be repeated here.

In some embodiments, the first sealing portion opening 31a communicates with the first opening 331. The gas pressure within the battery module 100 is discharged through the first through-hole 10a, the first opening 331, and the first pressure relief channel, facilitating pressure relief.

In some embodiments, along the first direction X, the projection of the first opening 331 is located within the projection of the first sealing portion opening 31a, further facilitating pressure relief and reducing the risk of the melted first sealing portion 31 blocking the first opening 331.

In some embodiments, the first connecting portion 32 in Embodiment 3 is the same as the first connecting portion 32 in Embodiment 2, and will not be repeated here.

In some embodiments, the first fixing portion 33 is configured to be circular. In other embodiments, the first connecting portion 32 may also be configured to have other shapes, such as elliptical or rectangular.

In some embodiments, an outer diameter D3 of the first fixing portion 33 satisfies 1 mm ≤ D3 ≤ 6 mm, and D3 is greater than or equal to the outer diameter D1 of the first through-hole 10a, facilitating the connection of the first fixing portion 33 to the first side wall. D3 may be any one of 1 mm, 2 mm, 3 mm, 4 mm, 5 mm, or 6 mm.

In some embodiments, the outer diameter D3 of the first fixing portion 33 satisfies 2 mm ≤ D3 ≤ 5 mm, which facilitates the connection of the first fixing portion 33 to the first side wall while reducing the occupied space. D3 may be any one of 2 mm, 3 mm, 4 mm, or 5 mm.

Optionally, when the outer diameter of the first fixing portion 33 is greater than the outer diameter of the first through-hole 10a, the first fixing portion 33 is fixedly connected to the first side wall 121 by welding.

Optionally, when the outer diameter of the first fixing portion 33 is equal to the outer diameter of the first through-hole 10a, the first fixing portion 33 is disposed in the first through-hole 10a by welding, further reducing the space occupied by the first fixing portion 33.

In some embodiments, along the first direction X, the projection of the first opening 331 is located within the projection of the first through-hole 10a, which can reduce the entry of water or water vapor into the accommodating space 10c. In Embodiment 3, the area of the first opening 331 is the pressure relief area.

In some embodiments, an area S1 of the first opening 331 satisfies 0.008 mm² ≤ S1 ≤ 16 mm². S1 may be any one of 0.008 mm², 0.009 mm², 0.010 mm², 0.011 mm², ..., 15.998 mm², 15.999 mm², or 16 mm².

In some embodiments, the battery module 100 includes an electrolyte (not shown), the electrolyte is disposed in the accommodating space 10c and infiltrates at least a portion of the battery cell 20. When the temperature of the battery module 100 reaches the first temperature T1, the SEI film decomposes, the battery cell 20 undergoes side reactions with the electrolyte, and the gas generation rate of the battery cell 20 is low. On the basis that the pressure relief rate corresponding to the pressure relief area S1 is not less than the gas generation rate, the smaller the pressure relief area S1 at this time, the less external water vapor and oxygen enter the battery module 100, reducing the risk of accelerated side reactions and combustion of the battery cell.

In some embodiments, the first opening 331 is configured to be circular, and the diameter of the first opening 331 is less than the diameter of the first through-hole 10a. In other embodiments, the first opening 331 may also be configured to have other shapes, such as elliptical or rectangular.

In some embodiments, the outer diameter of the first fixing portion 33 is greater than or equal to the outer diameter of the first connecting portion 32, and the outer diameter of the first connecting portion 32 is greater than the diameter of the first opening 331, which is beneficial for reducing the infiltration of water or water vapor into the accommodating space 10c, reducing the risk of short-circuiting.

In some embodiments, a diameter d1 of the first opening 331 satisfies 0.1 mm ≤ d1 ≤ 4 mm. d1 may be any one of 0.1 mm, 0.2 mm, 0.3 mm, 0.4 mm, 0.5 mm, 0.6 mm, 0.7 mm, ..., 3.1 mm, 3.2 mm, 3.3 mm, 3.4 mm, 3.5 mm, 3.6 mm, 3.7 mm, 3.8 mm, 3.9 mm, or 4 mm.

In some embodiments, the diameter d1 of the first opening 331 satisfies 0.3 mm ≤ d1 ≤ 3 mm, which can further reduce the entry of water or water vapor into the accommodating space 10c. d1 may be any one of 0.3 mm, 0.4 mm, 0.5 mm, 0.6 mm, 0.7 mm, ..., 2.1 mm, 2.2 mm, 2.3 mm, 2.4 mm, 2.5 mm, 2.6 mm, 2.7 mm, 2.8 mm, 2.9 mm, or 3 mm.

In some embodiments, when the first opening 331 has other shapes, a side length of the first opening 331 satisfies the range of d1. For example, if the first opening 331 is square, the side length L1 of the first opening 331 satisfies 0.1 mm ≤ L1 ≤ 4 mm.

In some embodiments, the thickness h3 of the first fixing portion 33 satisfies 0.03 mm ≤ h3 ≤ 1.00 mm, which is beneficial for reducing the space occupied by the first fixing portion 33. h3 may be any one of 0.03 mm, 0.04 mm, 0.05 mm, 0.06 mm, 0.07 mm, 0.08 mm, 0.09 mm, 0.10 mm, ..., 0.91 mm, 0.92 mm, 0.93 mm, 0.94 mm, 0.95 mm, 0.96 mm, 0.97 mm, 0.98 mm, 0.99 mm, or 1.0 mm.

In some embodiments, the thickness h3 of the first fixing portion 33 satisfies 0.05 mm ≤ h3 ≤ 0.15 mm, which is beneficial for reducing the space occupied by the first fixing portion 33 and facilitating welding. h3 may be any one of 0.05 mm, 0.06 mm, 0.07 mm, 0.08 mm, 0.09 mm, 0.10 mm, 0.11 mm, 0.12 mm, 0.13 mm, 0.14 mm, or 0.15 mm.

In some embodiments, the first fixing portion 33 includes at least one metal material selected from aluminum, nickel, and stainless steel. In other embodiments, the first fixing portion 33 may also include other metal materials, such as at least one of copper, iron, tin, platinum, zinc, titanium, tungsten, or lead.

In some embodiments, the second seal 40 includes a second sealing portion 41, a second connecting portion 42, and a second fixing portion 43. Two sides of the second sealing portion 41 are connected to the second connecting portion 42 and the second fixing portion 43. The second fixing portion 43 is connected to the housing 10. The second fixing portion 43 is provided with a second opening 431. The second opening 431 penetrates the second fixing portion 43, and the second opening 431 communicates with the second through-hole 10b. The second fixing portion 43 can enhance the connection strength between the second seal 40 and the housing 10, reducing the risk of gas leakage.

In some embodiments, the second sealing portion 41 in Embodiment 3 is the same as the second sealing portion 41 in Embodiment 2, and will not be repeated here.

In some embodiments, the second sealing portion opening 41a communicates with the second opening 431. The gas pressure within the battery module 100 is discharged through the second through-hole 10b, the second opening 431, and the second pressure relief channel, facilitating pressure relief.

In some embodiments, along the first direction X, the projection of the second opening 431 is located within the projection of the second sealing portion opening 41a, further facilitating pressure relief and reducing the risk of the melted second sealing portion 41 blocking the second opening 431.

In some embodiments, the second connecting portion 42 in Embodiment 3 is the same as the second connecting portion 42 in Embodiment 2, and will not be repeated here.

In some embodiments, the second fixing portion 43 is configured to be circular. In other embodiments, the second connecting portion 42 may also be configured to have other shapes, such as elliptical or rectangular.

In some embodiments, an outer diameter D4 of the second fixing portion 43 satisfies 1 mm ≤ D4 ≤ 6 mm, and D4 is greater than or equal to the outer diameter D2 of the second through-hole 10b, facilitating the connection of the second fixing portion 43 to the first side wall. D4 may be any one of 1 mm, 2 mm, 3 mm, 4 mm, 5 mm, or 6 mm.

In some embodiments, the outer diameter D4 of the second fixing portion 43 satisfies 2 mm ≤ D4 ≤ 5 mm, which facilitates the connection of the second fixing portion 43 to the first side wall while reducing the occupied space. D4 may be any one of 2 mm, 3 mm, 4 mm, or 5 mm.

Optionally, when the outer diameter of the second fixing portion 43 is greater than the outer diameter of the second through-hole 10b, the second fixing portion 43 is fixedly connected to the first side wall 121 by welding.

Optionally, when the outer diameter of the second fixing portion 43 is equal to the outer diameter of the second through-hole 10b, the second fixing portion 43 is disposed in the second through-hole 10b by welding, further reducing the space occupied by the second fixing portion 43.

In some embodiments, along the first direction X, the projection of the second opening 431 is located within the projection of the second through-hole 10b, which can reduce the entry of water or water vapor into the accommodating space 10c. In Embodiment 3, the area of the second opening 431 is the pressure relief area.

In some embodiments, an area of the second opening 431 is greater than an area of the first opening 331, increasing the pressure relief area, which is beneficial for pressure relief. An area S2 of the second opening 431 satisfies 0.07 mm² ≤ S2 ≤ 25 mm². S2 may be any one of 0.07 mm², 0.08 mm², 0.09 mm², 0.01 mm², 0.11 mm², ..., 24.998 mm², 24.999 mm², or 25 mm².

In some embodiments, when the temperature of the battery module 100 reaches the second temperature T2, the separator melts, the positive electrode plate and the negative electrode plate short-circuit, the negative electrode plate continues to undergo side reactions with the electrolyte, and the gas generation rate of the battery cell 20 is high, exceeding the pressure relief rate of the first pressure relief channel. The second pressure relief channel melts and opens, increasing the pressure relief area. On the basis that the pressure relief rate corresponding to the pressure relief area S2 is not less than the gas generation rate, the larger the pressure relief area S2 at this time, the higher the pressure relief rate, enabling rapid pressure relief, discharging gas and heat, and reducing the risk of short-circuiting between the battery cell 20 and the housing 10 due to further deformation of the housing 10.

In some embodiments, the second opening 431 is configured to be circular, and the diameter of the second opening 431 is less than the diameter of the second through-hole 10b. In other embodiments, the second opening 431 may also be configured to have other shapes, such as elliptical or rectangular.

In some embodiments, the outer diameter of the second fixing portion 43 is greater than or equal to the outer diameter of the second connecting portion 42, and the outer diameter of the second connecting portion 42 is greater than the diameter of the second opening 431, which is beneficial for reducing the infiltration of water or water vapor into the accommodating space 10c, reducing the risk of short-circuiting.

In some embodiments, a diameter d2 of the second opening 431 satisfies 0.3 mm ≤ d2 ≤ 5 mm. d2 may be any one of 0.3 mm, 0.4 mm, 0.5 mm, 0.6 mm, 0.7 mm, ..., 3.1 mm, 3.2 mm, 3.3 mm, 3.4 mm, 3.5 mm, 3.6 mm, 3.7 mm, 3.8 mm, 3.9 mm, 4 mm, 4.1 mm, 4.2 mm, 4.3 mm, 4.4 mm, 4.5 mm, 4.6 mm, 4.7 mm, 4.8 mm, 4.9 mm, or 5 mm.

In some embodiments, the diameter d2 of the second opening 431 satisfies 0.5 mm ≤ d2 ≤ 3 mm, which can further reduce the entry of water or water vapor into the accommodating space 10c. d2 may be any one of 0.5 mm, 0.6 mm, 0.7 mm, ..., 2.1 mm, 2.2 mm, 2.3 mm, 2.4 mm, 2.5 mm, 2.6 mm, 2.7 mm, 2.8 mm, 2.9 mm, or 3 mm.

In some embodiments, when the second opening 431 has other shapes, the side length of the second opening 431 satisfies the range defined by d2. For example, if the second opening 431 is square, the side length L2 of the second opening 431 satisfies 0.3 mm ≤ L2 ≤ 5 mm.

In some embodiments, a thickness h4 of the second fixing portion 43 satisfies 0.03 mm ≤ h4 ≤ 1.00 mm, which is beneficial for reducing the space occupied by the second fixing portion 43. h4 may be any one of 0.03 mm, 0.04 mm, 0.05 mm, 0.06 mm, 0.07 mm, 0.08 mm, 0.09 mm, 0.10 mm, ..., 0.91 mm, 0.92 mm, 0.93 mm, 0.94 mm, 0.95 mm, 0.96 mm, 0.97 mm, 0.98 mm, 0.99 mm, or 1.0 mm.

In some embodiments, the thickness h4 of the second fixing portion 43 satisfies 0.05 mm ≤ h4 ≤ 0.15 mm, which is beneficial for reducing the space occupied by the second fixing portion 43 and facilitating welding. h4 may be any one of 0.05 mm, 0.06 mm, 0.07 mm, 0.08 mm, 0.09 mm, 0.10 mm, 0.11 mm, 0.12 mm, 0.13 mm, 0.14 mm, or 0.15 mm.

In some embodiments, the second fixing portion 43 includes at least one metal material selected from aluminum, nickel, and stainless steel. In other embodiments, the second fixing portion 43 may also include other metal materials, such as at least one of copper, iron, tin, platinum, zinc, titanium, tungsten, or lead.

In some embodiments, the first seal 30 and the second seal 40 may be combined using different structures. For example, the first seal 30 adopts the structure in Embodiment 2, and the second seal 40 adopts the structure in Embodiment 3.

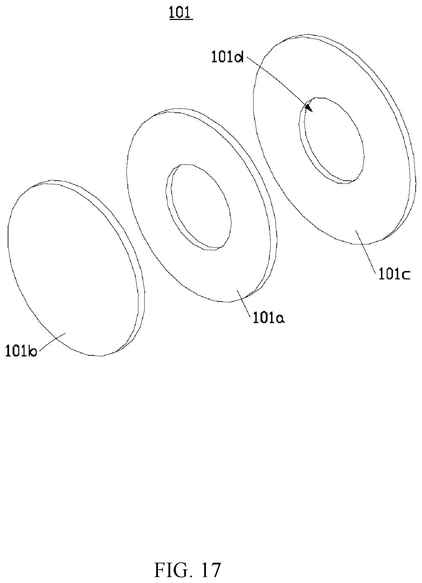

Referring to FIG. 17, the present application also provides a seal 101 for sealing the housing 10 of the battery module 100 described above. The seal 101 includes a sealing portion 101a and a connecting portion 101b. The connecting portion 101b is adhesively bonded to the sealing portion 101a. The sealing portion 101a is a sealant, and the sealing portion 101a is configured to lose adhesion and/or melt when a temperature reaches a third temperature.

In some embodiments, the seal 101 includes a fixing portion 101c. The fixing portion 101c is used to connect to the housing 10 of the battery module 100. The sealing portion 101a is connected to the fixing portion 101c. The fixing portion 101c is provided with an opening 101d, and the opening 101d communicates with the interior of the housing 10.

In some embodiments, the third temperature is from 95°C to 125°C or from 115°C to 145°C.

In some embodiments, the shape of the seal 101 includes any one of a racetrack shape, an elliptical shape, a rectangular shape, a circular shape, or a ring shape, to adapt to the thickness of the housing 10.

In some embodiments, the sealing portion 101a is the same as the first sealing portion 31 in any one of the above embodiments.

In some embodiments, the sealing portion 101a is the same as the second seal 41 in any one of the above embodiments.

In some embodiments, the connecting portion 101b is the same as the first connecting portion 32 in any one of the above embodiments.

In some embodiments, the connecting portion 101b is the same as the second connecting portion 42 in any one of the above embodiments.

In some embodiments, the fixing portion 101c is the same as the first fixing portion 33 in any one of the above embodiments.

In some embodiments, the fixing portion 101c is the same as the second fixing portion 43 in any one of the above embodiments.

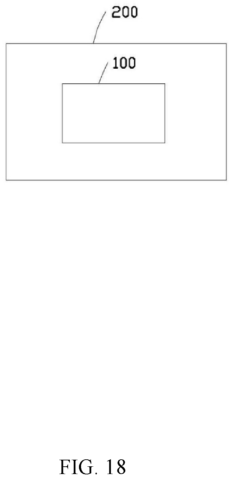

Referring to FIG. 18, the present application also provides an electric device 200 using the battery module 100 described above. In one embodiment, the electric device 200 of the present application may be, but is not limited to, an electronic device, an unmanned aerial vehicle, a backup power source, an electric vehicle, an electric motorcycle, an electric-assisted bicycle, an electric tool, a large household battery, or the like.

Those skilled in the art should recognize that the above embodiments are only used to illustrate the present application and are not intended to limit the present application. Appropriate changes and variations made to the above embodiments within the essential spirit and scope of the present application fall within the scope disclosed by the present application.

## Claims

1. A battery module comprising:
a housing, wherein the housing is provided with a first through-hole, a second through-hole, and an accommodating space, wherein the first through-hole communicates with the accommodating space, and the second through-hole communicates with the accommodating space;
a battery cell, wherein the battery cell is disposed in the accommodating space;
a first seal, wherein the first seal is connected to the housing and seals the first through-hole; and
a second seal, wherein the second seal is connected to the housing and seals the second through-hole;
wherein the first seal is configured to melt and/or lose adhesion to form a first pressure relief channel when an internal temperature of the battery module reaches a first temperature, and the second seal is configured to melt and/or lose adhesion to form a second pressure relief channel when the internal temperature of the battery module reaches a second temperature, the second temperature being greater than the first temperature.

2. The battery module according to claim 1, wherein the housing comprises a bottom wall and a side wall, the side wall is connected to the bottom wall, the first seal and the side wall are arranged along a first direction, the first through-hole penetrates the side wall, the second through-hole penetrates the side wall, and the first direction is a length direction or a width direction of the battery module.

3. The battery module according to claim 2, wherein the side wall comprises a first side wall, the battery module comprises an electrical connector, the electrical connector is connected to the battery cell and extends from the first side wall, and a first space is provided between the first side wall and the battery cell; and
the first through-hole penetrates the first side wall, and the second through-hole penetrates the first side wall.

4. The battery module according to claim 2, wherein the side wall comprises a first side wall and a second side wall, the battery module comprises an electrical connector, the electrical connector is connected to the battery cell and extends from the first side wall, the first side wall and the second side wall are arranged along the first direction, the first through-hole penetrates the second side wall, and the second through-hole penetrates the second side wall.

5. The battery module according to claim 1, wherein the first seal comprises a first sealing portion, and the first sealing portion is adhesively bonded to the housing.

6. The battery module according to claim 1, wherein the first seal comprises a first sealing portion and a first connecting portion, the first connecting portion is adhesively bonded to the first sealing portion, and the first sealing portion is adhesively bonded to the housing.

7. The battery module according to claim 1, wherein the first seal comprises a first connecting portion, a first sealing portion, and a first fixing portion, two sides of the first sealing portion are connected to the first connecting portion and the first fixing portion, the first fixing portion is connected to the housing, the first fixing portion is provided with a first opening, and the first opening communicates with the first through-hole.

8. The battery module according to claim 7, wherein an area S1 of the first opening satisfies 0.008 mm² ≤ S1 ≤ 16 mm².

9. The battery module according to claim 7, wherein the first sealing portion comprises a first adhesive layer, a first support layer, and a second adhesive layer, the first adhesive layer adhesively bonds the first connecting portion and the first support layer, and the second adhesive layer adhesively bonds the first fixing portion and the first support layer.

10. The battery module according to claim 7, wherein the first connecting portion and the first fixing portion comprise at least one metal material selected from aluminum, nickel, and stainless steel.

11. The battery module according to claim 8, wherein a thickness h1 of the first connecting portion satisfies 0.03 mm ≤ h1 ≤ 1.00 mm.

12. The battery module according to claim 8, wherein the first sealing portion is provided with a first sealing portion opening, and the first sealing portion opening communicates with the first opening.

13. The battery module according to claim 1, wherein the second seal comprises a second sealing portion, and the second sealing portion is adhesively bonded to the housing.

14. The battery module according to claim 1, wherein the second seal comprises a second sealing portion and a second connecting portion, the second connecting portion is adhesively bonded to the second sealing portion, and the second sealing portion is adhesively bonded to the housing.

15. The battery module according to claim 7, wherein the second seal comprises a second connecting portion, a second sealing portion, and a second fixing portion, two sides of the second sealing portion are connected to the second connecting portion and the second fixing portion, the second fixing portion is connected to the housing, the second fixing portion is provided with a second opening, and the second opening communicates with the second through-hole.

16. The battery module according to claim 15, wherein an area of the second opening is greater than an area of the first opening.

17. The battery module according to claim 15, wherein an area S2 of the second opening satisfies 0.07 mm² ≤ S2 ≤ 25 mm².

18. The battery module according to claim 7, wherein a diameter d1 of the first opening satisfies 0.1 mm ≤ d1 ≤ 4 mm.

19. The battery module according to claim 15, wherein a diameter d2 of the second opening satisfies 0.3 mm ≤ d2 ≤ 5 mm.

20. The battery module according to claim 2, wherein, along the first direction, a projected area of the second through-hole is greater than or equal to a projected area of the first through-hole.

21. The battery module according to claim 20, wherein a diameter D1 of the first through-hole satisfies 0.5 mm ≤ D1 ≤ 5.5 mm.

22. The battery module according to claim 20, wherein a diameter D2 of the second through-hole satisfies 0.5 mm ≤ D2 ≤ 5.5 mm.

23. The battery module according to claim 1, wherein the first temperature T1 satisfies 95°C ≤ T1 ≤ 125°C.

24. The battery module according to claim 23, wherein the first temperature T1 satisfies 105°C ≤ T1 ≤ 120°C.

25. The battery module according to claim 1, wherein the second temperature T2 satisfies 115°C ≤ T2 ≤ 145°C.

26. The battery module according to claim 25, wherein the second temperature T2 satisfies 120°C ≤ T2 ≤ 135°C.

27. The battery module according to claim 1, wherein the housing is provided with a first recess formed from an outer surface of the housing to an inner surface of the housing, the first through-hole penetrates a portion of a bottom surface of the first recess, the first seal is disposed in the first recess, and the first seal does not protrude beyond a surface of the housing.

28. The battery module according to claim 1, wherein the housing is provided with a second recess formed from an outer surface of the housing to an inner surface of the housing, the second through-hole penetrates a portion of a bottom surface of the second recess, the second seal is disposed in the second recess, and the second seal does not protrude beyond a surface of the housing.

29. The battery module according to claim 3, wherein a height by which the first seal protrudes from the first side wall is less than a height by which the electrical connector protrudes from the first side wall, and a height by which the second seal protrudes from the first side wall is less than the height by which the electrical connector protrudes from the first side wall.

30. The battery module according to claim 15, wherein the second connecting portion and the second fixing portion comprise at least one metal material selected from aluminum, nickel, and stainless steel.

31. An electric device comprising the battery module according to any one of claims 1 to 30.

32. A seal for sealing a battery module housing, wherein the seal comprises:
a sealing portion and a connecting portion, wherein the connecting portion is adhesively bonded to the sealing portion, the sealing portion is a sealant, and the sealing portion is configured to lose adhesion and/or melt when a temperature reaches a third temperature.

33. The seal according to claim 32, wherein the seal further comprises a fixing portion, the fixing portion is disposed on a side of the sealing portion facing away from the connecting portion, and the fixing portion is provided with an opening.

34. The seal according to claim 32, wherein the third temperature is from 95°C to 125°C or from 115°C to 145°C.

35. The seal according to claim 32, wherein a material of the sealing portion comprises any one of polypropylene, polyethylene, polyvinylidene fluoride, or polytetrafluoroethylene.

36. The seal according to claim 33, wherein the connecting portion and the fixing portion comprise at least one metal material selected from aluminum, nickel, and stainless steel.

37. The seal according to claim 32, wherein a shape of the seal comprises any one of a racetrack shape, an elliptical shape, a rectangular shape, a circular shape, or a ring shape.
